# EUROPÄISCHE PATENTSCHRIFT

(11) **EP 3 022 102 B1**
(45) Veröffentlichungstag und Bekanntmachung des Hinweises auf die Patenterteilung: **27.03.2019**
(21) Anmeldenummer: 14739048.8
(22) Anmeldetag: 11.07.2014
(51) Int. Cl.: B60W 30/18

(54) **VERFAHREN ZUM BETREIBEN EINES FAHRERASSISTENZSYSTEMS EINES KRAFTWAGENS UND FAHRERASSISTENZSYSTEM FÜR EINEN KRAFTWAGEN**
METHOD FOR OPERATING A DRIVER ASSISTANCE SYSTEM OF A MOTOR VEHICLE AND DRIVER ASSISTANCE SYSTEM FOR A MOTOR VEHICLE
PROCÉDÉ PERMETTANT DE FAIRE FONCTIONNER UN SYSTÈME D'ASSISTANCE AU CONDUCTEUR D'UN VÉHICULE AUTOMOBILE ET SYSTÈME D'ASSISTANCE AU CONDUCTEUR POUR UN VÉHICULE AUTOMOBILE

(30) Priorität: 19.07.2013 DE 102013012122
(43) Veröffentlichungstag der Anmeldung: 25.05.2016
(73) Patentinhaber: Audi AG, 85045 Ingolstadt (DE)
(72) Erfinder: KÜHNE, Marcus, 92339 Beilngries (DE); SCHNEIDER, Johann, 85139 Wettstetten (DE)
(86) Internationale Anmeldenummer: PCT/EP2014/001916
(87) Internationale Veröffentlichungsnummer: WO 2015/007379

(56) Entgegenhaltungen:
- EP-A2- 1 346 877
- WO-A1-99/30919
- DE-A1- 19 818 236
- DE-A1-102009 040 674
- KR-A- 20110 062 651
- US-A1- 2004 150 514
- US-A1- 2010 328 055
- Fahrstunde.De: "Verkehrsbeobachtung", , 1. Januar 2012 (2012-01-01), XP055147907, Gefunden im Internet: URL:http://www.fahrstunde.de/fahrschueler_ b/aufbaulevel/verkehrsbeobachtung/verkehrs beobachtung [gefunden am 2014-10-21]

## Beschreibung

Die Erfindung betrifft ein Verfahren zum Betreiben eines Fahrerassistenzsystems eines Kraftwagens sowie ein Fahrerassistenzsystem für einen Kraftwagen der in den Oberbegriffen der unabhängigen Patentansprüche angegebenen Art.

Beim Betreiben eines Fahrerassistenzsystems ist eine frühzeitige Information, ob ein Fahrer einen Spurwechsel plant, zum Teil von großer Bedeutung. Dies ist insbesondere der Fall, wenn es sich um ein zur Unterstützung oder Steuerung der Querführung des Kraftwagens dienendes Fahrerassistenzsystem handelt.

Die DE 10 2010 004 625 A1 zeigt ein Verfahren zur Unterstützung eines Fahrers bei einem Überholvorgang. Anhand einer erfassten Blickrichtung eines Fahrers des Kraftwagens wird eine Spurwechselabsicht des Fahrers ermittelt, wobei ein Fahrerassistenzsystem des Kraftwagens unter Berücksichtigung der ermittelten Spurwechselabsicht entsprechend betrieben wird.

Die DE 10 2010 041 620 A1 zeigt ebenfalls ein Verfahren zur Unterstützung eines Fahrers bei einem Überholvorgang. Bei dem dort offenbarten Verfahren wird ebenfalls anhand einer erfassten Blickrichtung eines Fahrers des Kraftwagens eine entsprechende Spurwechselabsicht ermittelt und ein Fahrerassistenzsystem des Kraftwagens unter Berücksichtigung der ermittelten Spurwechselabsicht entsprechend betrieben.

Die WO 2010045908 A1 zeigt ein Verfahren zur automatischen Fahrtrichtungsanzeige. Es wird eine Blickrichtung eines Fahrers des Kraftwagens ermittelt und basierend darauf eine entsprechende Spurwechselabsicht des Fahrers anhand der erfassten Blickrichtung abgeschätzt. In Abhängigkeit der abgeschätzten Spurwechselabsicht erfolgt eine entsprechende Aktivierung einer Fahrtrichtungsanzeige des Kraftwagens.

Die DE 198 18 236 A1 zeigt eine Vorrichtung zur Überwachung eines Fahrspurwechsels eines Kraftfahrzeugs. Anhand einer erfassten Blickrichtung eines Fahrers des Kraftwagens wird überwacht, wie lange ein Fahrer vor oder während eines Spurwechsels in einen Spiegel des Kraftwagens geschaut hat, wobei, falls eine zu kurze Blickzuwendung zu dem Spiegel erfasst wird, eine entsprechende Warnmeldung ausgegeben wird.

Die EP 1 346 877 A2 zeigt ein Kraftfahrzeug, mit einem Spurwechselassistenz-System zur Erfassung einer Gefahrensituation bei einem Spurwechsel umfassend eine Einrichtung zum Erfassen etwaiger Kraftfahrzeuge in einem seitlichen und rückwärtigen Fahrzeugbereich, sowie mit einer seitlichen und/oder rückwärtigen Leuchteinrichtung, wobei eine Einrichtung zum Betätigen der seitlichen und/oder rückwärtigen Leuchteinrichtung zur Gabe eines Warnsignals bei Vorliegen eines eine Spurwechselabsicht des Fahrers anzeigenden Signals und eines von dem Spurwechselassistenz-System zu gebenden und eine erfasste Gefahrensituation anzeigenden Signals vorgesehen ist.

Es ist die Aufgabe der vorliegenden Erfindung, ein Verfahren sowie ein Fahrerassistenzsystem der eingangs genannten Art bereitzustellen, mittels welchen auf verbesserte Weise eine Spurwechselabsicht eines Fahrers erfasst werden kann.

Diese Aufgabe wird durch ein Verfahren zum Betreiben eines Fahrerassistenzsystems sowie durch ein Fahrerassistenzsystem für einen Kraftwagen mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Das erfindungsgemäße Verfahren zum Betreiben eines Fahrerassistenzsystems eines Kraftwagens umfasst die Schritte:
- Erfassen einer Blickrichtung eines Fahrers des Kraftwagens;
- Ermitteln einer Spurwechselabsicht des Fahrers anhand der erfassten Blickrichtung;
- Betreiben des Fahrerassistenzsystems unter Berücksichtigung der ermittelten Spurwechselabsicht;
wobei sich das erfindungsgemäße Verfahren dadurch auszeichnet, dass
- anhand der erfassten Blickrichtung ermittelt wird, ob eine Blickzuwendung des Fahrers zu jeweils vorgegebenen Spiegeln des Kraftwagens gemäß einer ersten vorbestimmten Reihenfolge oder gemäß einer zweiten vorbestimmten Reihenfolge erfolgt ist;
- falls eine Blickzuwendung gemäß der ersten vorbestimmten Reihenfolge ermittelt worden ist, eine Spurwechselabsicht nach links ermittelt wird;
- falls eine Blickzuwendung gemäß der zweiten vorbestimmten Reihenfolge ermittelt worden ist, eine Spurwechselabsicht nach rechts ermittelt wird.

Es ist also erfindungsgemäß vorgesehen, eine entsprechende Spurwechselabsicht des Fahrers in Abhängigkeit von einem entsprechend detektierten und vorbestimmten Spiegelblickmuster zu erfassen. Dadurch kann eine Fahrerintension bezüglich einer Spurwechselabsicht besonders frühzeitig - und zwar noch vor einer Einleitung eines Spurwechsels - ermittelt werden. Der Erfindung liegt dabei die Erkenntnis zugrunde, dass ein Fahrer üblicherweise schon vor einer Einleitung eines Spurwechselvorgangs, je nachdem, ob ein Spurwechsel nach links oder nach rechts geplant ist, ein entsprechend spezifisches Spiegelblickmuster durchführt. Mit anderen Worten wird ein und derselbe Fahrer des Kraftwagens üblicherweise immer in derselben Reihenfolge seinen Blick entsprechenden Spiegeln des Kraftwagens zuwenden, bevor er einen Spurwechsel vornimmt. Insbesondere dadurch, dass es erfindungsgemäß vorgesehen ist, in Abhängigkeit eines jeweils detektierten Spiegelblickmusters zu unterscheiden, ob der Fahrer gerade einen Spurwechsel nach links oder nach rechts vornehmen möchte, kann das entsprechende Fahrerassistenzsystem besonders frühzeitig, und zwar noch vor dem Einleiten des Spurwechsels, mit entsprechenden Informationen bezüglich des geplanten Spurwechsels versorgt werden. Dadurch kann die Verkehrssicherheit beim Führen des Kraftwagens erheblich erhöht werden, da das Fahrerassistenzsystem dadurch noch vor einer eigentlichen Durchführung eines Spurwechsels Maßnahmen zur Erhöhung der Verkehrssicherheit beim Führen des Kraftwagens vornehmen kann.

Gemäß der Erfindung ist es vorgesehen, dass die erste vorbestimmte Reihenfolge eine Blickzuwendung des Fahrers zu einem Innenspiegel des Kraftwagens und eine anschließende Blickzuwendung zu einem linken Außenspiegel des Kraftwagens umfasst. Ferner ist es gemäß der Erfindung vorgesehen, dass die zweite vorbestimmte Reihenfolge eine Blickzuwendung des Fahrers zu einem Innenspiegel des Kraftwagens und eine anschließenden Blickzuwendung zu einem rechten Außenspiegel des Kraftwagens umfasst. Vor einem Spurwechsel erfolgt nämlich meistens ein erster Orientierungsblick in den Rückspiegel und dann in den entsprechenden Seitenspiegel, auf dessen Seite der Spurwechsel erfolgen soll. Aus einem solchen Muster in Form der jeweils vorgegebenen beziehungsweise vorbestimmten Reihenfolgen und einem Abgleich der erfassten Blickrichtung des Fahrers kann eine anstehende Spurwechselabsicht bereits sehr frühzeitig, beispielsweise vor einem aktiven Setzen eines Blinkers erkannt werden.

In weiterer vorteilhafter Ausgestaltung der Erfindung ist es vorgesehen, dass die jeweilige Spurwechselabsicht nur dann ermittelt wird, falls die Blickzuwendung gemäß einer der jeweiligen vorbestimmten Reihenfolgen innerhalb einer vorgegebenen Dauer erfolgt ist. Denn üblicherweise wird ein Fahrer des Kraftwagens diese Spiegelblickmuster innerhalb eines bestimmten Zeitraums, beispielsweise innerhalb 1 Sekunde oder auch weniger Sekunden oder dergleichen vornehmen, falls er tatsächlich einen Spurwechsel planen sollte. Dadurch werden insbesondere solche Situationen unterschieden, in welchen der Fahrer beispielsweise innerhalb eines längeren Zeitraums, beispielsweise 10 Sekunden oder auch mehr Sekunden, einen Blick in den Rückspiegel und anschließend in einen der Seitenspiegel wirft. Dadurch wird die Zuverlässigkeit der Vorhersage eines entsprechenden Spurwechsels nochmals erhöht.

In weiterer vorteilhafter Ausgestaltung der Erfindung ist es vorgesehen, dass die vorgegebene Dauer in Abhängigkeit von einer aktuellen Geschwindigkeit des Kraftwagens und/oder einer aktuellen Geschwindigkeitsbegrenzung angepasst wird. Bei besonders langsamer Fahrt mit dem Kraftwagen, beispielsweise während einer Stadtfahrt, kann es nämlich sein, dass das Spiegelblickmuster innerhalb eines längeren Zeitraums und beispielsweise bei einer besonders schnellen Fahrt über eine Autobahn innerhalb eines wesentlich kürzeren Zeitraums erfolgt. Dem kann durch die entsprechende Anpassung der vorgegebenen Dauer in Abhängigkeit von einer aktuellen Geschwindigkeit des Kraftwagens und/oder einer aktuellen Geschwindigkeitsbegrenzung Rechnung getragen werden, wodurch die zuverlässige Vorhersage eines entsprechenden Spurwechsels nochmals erhöht werden kann.

Gemäß der Erfindung ist es vorgesehen, dass die jeweilige Spurwechselabsicht nur dann ermittelt wird, falls zusätzlich innerhalb eines vorgegebenen Zeitraums vor, während und/oder nach der jeweiligen Blickzuwendung gemäß einer der vorbestimmten Reihenfolgen eine Berührung eines Blinkerhebels des Kraftwagens ermittelt worden ist. Dadurch kann eine noch höhere Genauigkeit bei der Vorhersage einer solchen Spurwechselintension erzielt werden, da beispielsweise im Zusammenspiel mit einer sensorischen Erfassung eine Berührung des Blinkerhebels eine Verifikation der zuvor abgeschätzten Spurwechselabsicht erfolgen kann. Am Blinkerhebel sind ober- und unterseitig Sensoreinheiten angeordnet, mittels welchen eine entsprechende Berührung der Blinkerhebels erfasst wird. Ferner ist erfindungsgemäß vorgesehen, dass eine Spurwechselabsicht nach links nur dann ermittelt wird, falls eine Berührung an einer Oberseite des Blinkers ermittelt worden ist. Ferner ist es vorgesehen, dass eine Spurwechselabsicht nach rechts nur dann ermittelt wird, falls eine Berührung an einer Unterseite des Blinkerhebels ermittelt worden ist. Dadurch kann in Kombination mit einem Abgleich des jeweilig erfassten Spiegelblickmusters eine noch zuverlässigere Vorhersage einer entsprechenden Spurwechselabsicht nach links oder rechts erfolgen.

In weiterer vorteilhafter Ausgestaltung der Erfindung ist es vorgesehen, dass unter Berücksichtigung der ermittelten Spurwechselabsicht wenigstens ein vor dem entsprechenden Spurwechsel warnendes Signal ausgegeben wird, falls mittels des Fahrerassistenzsystems eine vorgegebene Gefahrensituation erfasst wird. Bei der vorgegebenen Gefahrensituation kann es sich beispielsweise um ein Fahrzeug handeln, welches sich zumindest teilweise neben dem Kraftwagen auf einer mit der ermittelten Spurwechselabsicht korrespondierenden Fahrspur, beispielsweise im Bereich eines toten Winkels oder dergleichen, befindet. Alternativ kann es sich bei der vorgegebenen Gefahrensituation auch beispielsweise um ein herannahendes Fahrzug handeln, welches sich dem Kraftwagen auf einer mit der ermittelten Spurwechselabsicht korrespondierenden, benachbarten Fahrspur von hinten mit zumindest einer vorgegebenen Relativgeschwindigkeit nähert. Durch die frühzeitige Erkennung beziehungsweise Abschätzung der Spurwechselabsicht in Kombination mit der Ausgabe eines Warnsignals wird der Fahrer noch vor dem Durchführen des eigentlichen Spurwechsels auf eine potentielle Gefahr hingewiesen, wodurch die Verkehrssicherheit beim Führen des Kraftwagens erheblich gesteigert werden kann.

Gemäß einer weiteren vorteilhaften Ausführungsform der Erfindung ist es vorgesehen, dass unter Berücksichtigung der ermittelten Spurwechselabsicht die Durchführung des entsprechenden Spurwechsels durch das Fahrerassistenzsystem unterbunden oder erschwert wird, so lange mittels des Fahrerassistenzsystems eine vorgegebene Gefahrensituation erfasst wird. Beispielsweise kann es möglich sein, dass ein Spurwechsel vollständig unterbunden wird, so lange die Gefahrensituation vorliegt, beispielsweise, indem ein nach links oder nach rechts Lenken mit dem Kraftwagen mittels des Fahrerassistenzsystems verhindert wird. Alternativ ist es auch möglich, dass lediglich ein Lenkwiderstand erhöht wird, so lange die Gefahrensituation erfasst wird. Dadurch wird vorausschauend verhindert, dass der Fahrer bei einem Spurwechsel beispielsweise mit einem von hinten herannahenden oder neben dem Kraftwagen fahrenden anderen Fahrzeug kollidiert.

Vorteilhafte Ausgestaltungen des erfindungsgemäßen Verfahrens sind als vorteilhafte Ausgestaltungen des Fahrerassistenzsystems anzusehen, wobei das Fahrerassistenzsystem insbesondere Mittel zur Durchführung der Verfahrensschritte umfasst.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Darstellung eines Kraftwagens mit einer Erfassungseinrichtung, welche dazu ausgelegt ist, in Abhängigkeit einer erfassten Blickrichtung eines Fahrers des Kraftwagens eine entsprechende Spurwechselabsicht zu ermitteln;
- Fig. 2: eine schematische Darstellung eines Lenkrads, zweier Außenspiegel und eines Innenspiegels eines Kraftwagens, wobei am Lenkrad ein Blinkerhebel sowie ein Lenkstockhebel zur Bedienung eines Tempomaten des Kraftwagens angeordnet sind; und
- Fig. 3: eine schematische Draufsicht auf eine dreispurige Fahrbahn, wobei der Kraftwagen auf der mittleren Fahrspur und weitere Kraftwagen auf der äußerst linken beziehungsweise auf der äußerst rechten Fahrspur fahren.

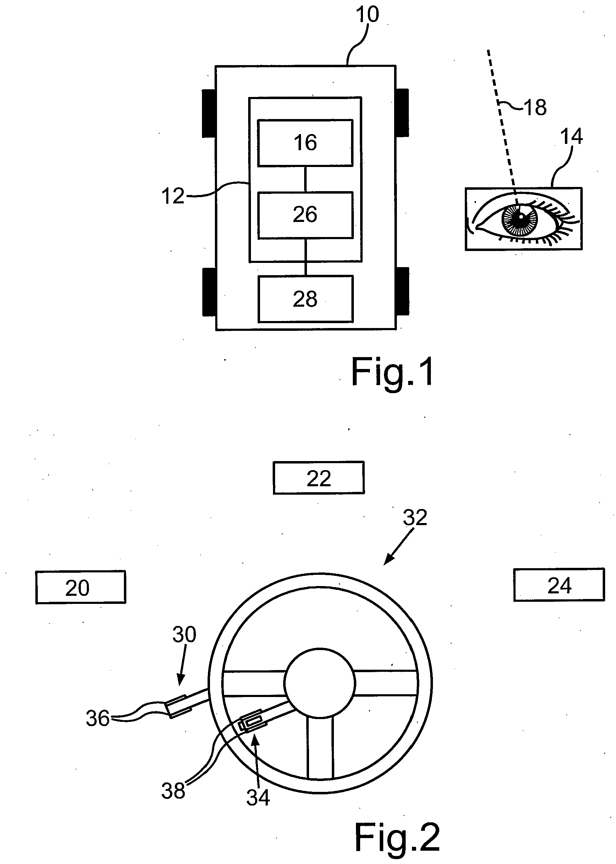

Ein Kraftwagen 10 mit einem Fahrerassistenzsystem 12 ist in einer schematischen Darstellung in Fig. 1 gezeigt. Bei dem Fahrerassistenzsystem 12 handelt es sich im vorliegenden Fall um einen Spurwechselassistenten, welcher einen Fahrer 14 vor drohenden Kollisionen bei einem Spurwechsel warnt oder auch in die Querführung des Kraftwagens 10 eingreifen kann.

Das Fahrerassistenzsystem 12 umfasst eine Blickerfassungseinrichtung 16, welche dazu ausgelegt ist, eine mit der gestrichelten Linie gekennzeichnete Blickrichtung 18 des Fahrers 14 zu erfassen und eine Spurwechselabsicht des Fahrers 14 anhand der erfassten Blickrichtung 18 zu ermitteln. Die Blickerfassungseinrichtung 16 ist dabei dazu ausgelegt, anhand der erfassten Blickrichtung 18 zu ermitteln, ob eine Blickzuwendung des Fahrers zu jeweils vorgegebenen Spiegeln 20, 22, 24, welche in Fig. 1 nicht dargestellt sind, gemäß einer ersten oder einer zweiten vorbestimmten Reihenfolge erfolgt ist. Die Blickerfassungseinrichtung 16 ist dazu ausgelegt, eine Spurwechselabsicht nach links zu ermitteln, falls eine Blickzuwendung gemäß der ersten vorbestimmten Reihenfolge ermittelt worden ist. Die Blickerfassungseinrichtung 16 ist ferner dazu ausgelegt, eine Spurwechselabsicht nach rechts zu ermitteln, falls eine Blickzuwendung gemäß der zweiten vorbestimmten Reihenfolge ermittelt worden ist. Schließlich umfasst das Fahrerassistenzsystem 12 noch eine Steuereinrichtung 26, welche dazu ausgelegt ist, das Fahrerassistenzsystem 12 unter Berücksichtigung der ermittelten Spurwechselabsicht entsprechend zu betreiben.

Der Kraftwagen 10 umfasst zudem eine Erfassungseinrichtung 28, welche dazu ausgelegt ist, die Spurwechselabsicht des Fahrers 14 zusätzlich anhand einer entsprechend erfassten Berührung eines hier nicht dargestellten Blinkerhebels 30 zu ermitteln, was im Nachfolgenden noch näher erläutert wird.

Nachfolgend wird anhand der Fig. 2, in welcher in einer schematischen Darstellung ein Lenkrad 32 des Kraftwagens 10 sowie die bereits erwähnten Spiegel 20, 22, 24 dargestellt sind, erläutert. Am Lenkrad 32 sind der bereits erwähnte Blinkerhebel 30 sowie ein als Lenkstockhebel ausgebildetes Bedienelement 34 angeordnet. Das Bedienelement 34 dient im vorliegend gezeigten Fall zur Steuerung eines hier nicht dargestellten Tempomaten des Kraftwagens 10.

Während des Betreibens des Fahrerassistenzsystems 12 wird fortlaufend mittels der Blickerfassungseinrichtung 16 die Blickrichtung 18 des Fahrers 14 des Kraftwagens 10 erfasst. Anhand der erfassten Blickrichtung 18 wird ermittelt, ob eine Blickzuwendung des Fahrers 14 zu den jeweiligen Spiegeln 20, 22, 24 gemäß einer ersten vorbestimmten Reihenfolge oder gemäß einer zweiten vorbestimmten Reihenfolge erfolgt ist.

Die erste vorbestimmte Reihenfolge umfasst eine Blickzuwendung des Fahrers 14 zu dem Spiegel 22, welcher vorliegend ein Innenspiegel des Kraftwagens 10 sein soll, und eine anschließende Blickzuwendung zu dem Spiegel 20, bei welchem es sich im vorliegenden Fall um einen linken Außenspiegel des Kraftwagens 10 handelt. Die zweite vorbestimmte Reihenfolge umfasst eine Blickzuwendung des Fahrers zu dem Spiegel 22 und eine anschließende Blickzuwendung zu dem Spiegel 24, bei welchem es sich im vorliegenden Fall um einen rechten Außenspiegel des Kraftwagens 10 handeln soll.

Falls eine Blickzuwendung gemäß der ersten vorbestimmten Reihenfolge ermittelt worden ist, wird eine Spurwechselabsicht nach links, und falls eine Blickzuwendung gemäß der zweiten vorbestimmten Reihenfolge ermittelt worden ist, wird eine Spurwechselabsicht nach rechts ermittelt. Die jeweilige Spurwechselabsicht wird nur dann ermittelt, falls die Blickzuwendung gemäß einer der jeweiligen vorbestimmten Reihenfolgen innerhalb einer vorgegebenen Dauer, beispielsweise 1 Sekunde, 2 Sekunden oder dergleichen, erfolgt ist. Die vorgegebene Dauer kann dabei in Abhängigkeit von einer aktuellen Geschwindigkeit des Kraftwagens 10 und/oder einer aktuellen Geschwindigkeitsbegrenzung einer gerade mit dem Kraftwagen 10 befahrenen Straße angepasst werden. Beispielsweise wird die vorgegebene Dauer bei einer besonders langsamen Fahrt mit dem Kraftwagen 10, beispielsweise bei einer Stadtfahrt, auf einen höheren Wert gesetzt, als bei einer schnellen Autobahnfahrt.

Zusätzlich kann auch vorgesehen sein, dass die jeweilige Spurwechselabsicht nur dann ermittelt wird, falls zusätzlich innerhalb eines vorgegebenen Zeitraums vor, während und/oder nach der jeweiligen Blickzuwendung gemäß einer der vorbestimmten Reihenfolgen eine Berührung des Blinkerhebels 30 des Kraftwagens 10 durch die Erfassungseinrichtung 28 ermittelt worden ist. Die Erfassungseinrichtung 28 umfasst im vorliegenden Fall am Blinkerhebel 30 ober- und unterseitig angeordnete Sensoreinheiten 36, mittels welchen beispielsweise druckempfindlich oder kapazitiv eine entsprechende Berührung an einer Oberseite oder an einer Unterseite des Blinkerhebels 30 erfasst werden kann. Eine Spurwechselabsicht nach links wird nur dann ermittelt, falls neben der Erfassung des betreffenden Spiegelblickmusters eine Berührung an einer Oberseite des Blinkerhebels 30 ermittelt worden ist. Analog wird eine Spurwechselabsicht nur rechts dann ermittelt, falls eine Berührung an einer Unterseite des Blinkerhebels 36 innerhalb des vorgegebenen Zeitraums vor, während und/oder nach der jeweiligen Blickzuwendung gemäß einer der vorbestimmten Reihenfolgen ermittelt worden ist.

Zusätzlich kann es noch vorgesehen sein, dass zur Verifizierung der anhand des Blickmusters ermittelten Spurwechselabsicht zusätzlich mittels der Erfassungseinrichtung 28 ermittelt beziehungsweise erfasst wird, ob der Fahrer 14 gegebenenfalls das Bedienelement 34 an seiner Oberseite oder an seiner Unterseite berührt hat, wobei die Erfassungseinrichtung 28 dafür wiederum entsprechende Sensoreinheiten 38 aufweisen kann. Sollte der Fahrer 14 beispielsweise einen Spurwechsel planen und versehentlich statt des Blinkerhebels 30 das Bedienelement 34 zur Bedienung des Tempomaten berühren, wird dies trotzdem als Indiz dafür aufgefasst, dass der Fahrer 14 in Kombination mit dem erfassten Spiegelblickmuster höchst wahrscheinlich eigentlich den Blinkerhebel 30 berühren und später auch betätigen wollte, so dass dies ebenfalls zur zusätzlichen Verifikation der anhand der erfassten Blickrichtung 18 ermittelten Spurwechselabsicht herangezogen wird.

Zudem kann fahrerabhängig jeweils ein entsprechendes Profil zum Betreiben des Fahrerassistenzsystems 12 angelegt werden. Anhand einer fortlaufenden Überwachung des Fahrers 14 können entsprechende Blickmuster und auch Betätigungsmuster des Blinkerhebels 30 und des Bedienelements 34 erfasst und erkannt werden, nach denen ein tatsächlicher Spurwechsel von dem Fahrer 14 nach links oder nach rechts vorgenommen worden ist. Diese Informationen können zur Verbesserung der Ermittlung entsprechender Spurwechselabsichten des betreffenden Fahrers 14 herangezogen werden, wodurch beispielsweise auch die zuvor erwähnten, vorbestimmten Reihenfolgen der Blickzuwendungen oder auch zusätzliche kombinierte Reihenfolgen von Blickzuwendungen und Betätigungen des Blinkerhebels 30 und/oder des Bedienelements 34 angepasst werden können.

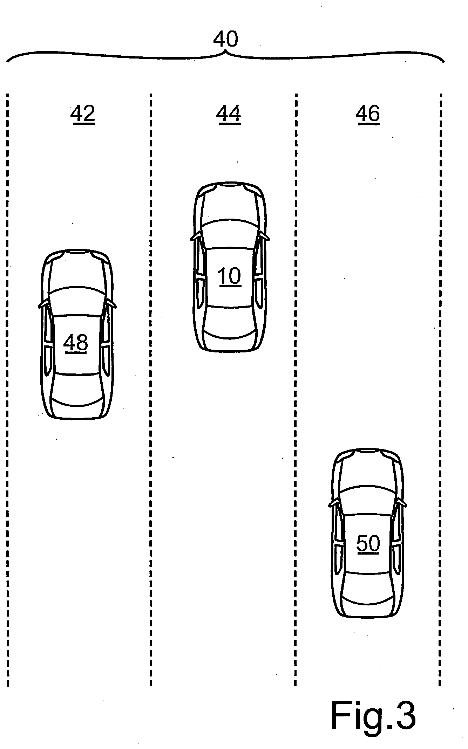

Anhand der Fig. 3, in welcher eine Fahrbahn 40 mit drei Fahrspuren 42, 44, 46 dargestellt ist, wird nachfolgend der Betrieb des Fahrerassistenzsystems 12 näher erläutert.

Im vorliegend gezeigten Fall bewegt sich der Kraftwagen 10 auf der mittleren Fahrspur 44, wobei weitere Kraftwagen 48, 50 die äußeren beiden Fahrspuren 42, 46 befahren. Mittels des Fahrerassistenzsystems 12 wird die Querführung des Kraftwagens 10 unter Berücksichtigung der entsprechend erfassten Spurwechselabsicht beeinflusst. Sollte beispielsweise erfasst werden, dass der Fahrer 14 mit seinem Kraftwagen 10 einen Spurwechsel von der mittleren Spur 44 auf die linke Fahrspur 42 vornehmen möchte, wird im vorliegend gezeigten Fall ein vor dem entsprechenden Spurwechsel warnendes Signal ausgegeben, da mittels des Fahrerassistenzsystems 12 der Kraftwagen 48 erfasst wird, welcher sich im toten Winkel des linken Außenspiegels 20 befindet. Neben der Ausgabe eines rein warnenden Signals, beispielsweise eines akustischen Signals und/oder eines Lenkradrüttelns, kann unter Berücksichtigung der ermittelten Spurwechselabsicht nach links die Durchführung des entsprechenden Spurwechsels nach links durch das Fahrerassistenzsystem 12 erschwert oder auch unterbunden werden. Unter einer Erschwerung des Spurwechsels kann beispielsweise verstanden werden, dass der Lenkwiderstand entsprechend stark erhöht wird, so lange der Kraftwagen 48 links vom Kraftwagen 10 erfasst wird. Alternativ ist auch eine Unterbindung des Spurwechsels nach links durch das Fahrerassistenzsystem 12 denkbar, so dass der Fahrer 14 beispielsweise den Kraftwagen 10 gar nicht auf die linke Spur 42 lenken kann.

Sollte stattdessen eine Spurwechselabsicht des Fahrers 14 nach rechts erfasst worden sein, kann das Fahrerassistenzsystem 12 ähnlich wie bei dem geplanten Spurwechsel nach links auch bei dem Spurwechsel nach rechts betrieben werden. Im vorliegenden Fall liegt durch den herannahenden Kraftwagen 50 eine Gefahrensituation vor, da dieser sich erhöhter Geschwindigkeit, also mit einer sehr hohen Relativgeschwindigkeit, dem Kraftwagen 10 auf der rechten Fahrspur 46 nähert. Sobald die Spurwechselabsicht nach rechts erfasst worden ist, wird durch das Fahrerassistenzsystem 12 ein rückwärtiger rechter Bereich des Kraftwagens 10 erfasst, so dass rechtzeitig erfasst werden kann, dass sich der Kraftwagen 50 mit erhöhter Geschwindigkeit auf der rechten äußeren Fahrspur 46 nähert. Da von einer Spurwechselabsicht nach rechts ausgegangen wird, wird durch das Fahrerassistenzsystem 12 ebenfalls eine Warnmeldung ausgegeben, wobei zusätzlich durch das Fahrerassistenzsystem 12 der Spurwechsel nach rechts erschwert oder auch unterbunden werden kann.

Durch das erläuterte Verfahren und das Fahrerassistenzsystem 12 kann besonders frühzeitig und exakt ein geplanter Fahrspurwechsel eines Fahrers eines Kraftwagens erfasst werden. Dadurch kann ein entsprechendes Fahrerassistenzsystem, insbesondere wenn es zur Unterstützung oder Steuerung der Querführung des Kraftwagens dient, rechtzeitig mit entsprechenden Informationen über einen sehr wahrscheinlich bevorstehenden Spurwechsel versorgt werden, so dass das Fahrerassistenzsystem besonders frühzeitig eine Querführung des Kraftwagens unterstützen, überwachen oder auch vollautomatisch steuern kann.

## Patentansprüche

1. Verfahren zum Betreiben eines Fahrerassistenzsystems (12) eines Kraftwagens (10), mit den Schritten:
- Erfassen einer Blickrichtung (18) eines Fahrers des Kraftwagens (10);
- Ermitteln einer Spurwechselabsicht des Fahrers (14) anhand der erfassten Blickrichtung (18);
- Betreiben des Fahrerassistenzsystems (12) unter Berücksichtigung der ermittelten Spurwechselabsicht;
**dadurch gekennzeichnet, dass**
- anhand der erfassten Blickrichtung (18) ermittelt wird, ob eine Blickzuwendung des Fahrers (14) zu jeweils vorgegebenen Spiegeln (20, 22, 24) des Kraftwagens (10) gemäß einer ersten vorbestimmten Reihenfolge oder gemäß einer zweiten vorbestimmten Reihenfolge erfolgt ist, wobei die erste vorbestimmte Reihenfolge eine Blickzuwendung des Fahrers (14) zu einem Innenspiegel (22) des Kraftwagens (10) und eine anschließende Blickzuwendung zu einem linken Außenspiegel (20) des Kraftwagens (10) und die zweite vorbestimmte Reihenfolge eine Blickzuwendung des Fahrers (14) zu dem Innenspiegel (22) des Kraftwagens (10) und eine anschließende Blickzuwendung zu einem rechten Außenspiegel (24) des Kraftwagens (10) umfasst;
- falls eine Blickzuwendung gemäß der ersten vorbestimmten Reihenfolge ermittelt worden ist, eine Spurwechselabsicht nach links ermittelt wird;
- falls eine Blickzuwendung gemäß der zweiten vorbestimmten Reihenfolge ermittelt worden ist, eine Spurwechselabsicht nach rechts ermittelt wird;
- die jeweilige Spurwechselabsicht nur dann ermittelt wird, falls zusätzlich innerhalb eines vorgegebenen Zeitraums vor, während und/oder nach der jeweiligen Blickzuwendung gemäß einer der vorbestimmten Reihenfolgen eine Berührung eines Blinkerhebels (30) des Kraftwagens (10) ermittelt worden ist, wobei am Blinkerhebel (30) ober- und unterseitig Sensoreinheiten (36) angeordnet sind, mittels welchen eine entsprechende Berührung des Blinkerhebels (30) erfasst wird;
- eine Spurwechselabsicht nach links nur dann ermittelt wird, falls eine Berührung an einer Oberseite des Blinkerhebels (30) ermittelt worden ist;
- eine Spurwechselabsicht nach rechts nur dann ermittelt wird, falls eine Berührung an einer Unterseite des Blinkerhebels (30) ermittelt worden ist.

2. Verfahren nach Anspruch 1,
**dadurch gekennzeichnet, dass**
die jeweilige Spurwechselabsicht nur dann ermittelt wird, falls die Blickzuwendung gemäß einer der jeweiligen vorbestimmten Reihenfolgen innerhalb einer vorgegebenen Dauer erfolgt ist.

3. Verfahren nach Anspruch 2,
**dadurch gekennzeichnet, dass**
die vorgegebene Dauer in Abhängigkeit von einer aktuellen Geschwindigkeit des Kraftwagens (10) und/oder einer aktuellen Geschwindigkeitsbegrenzung angepasst wird.

4. Verfahren nach einem der vorhergehenden Ansprüche,
**dadurch gekennzeichnet, dass**
unter Berücksichtigung der ermittelten Spurwechselabsicht wenigstens ein vor dem entsprechenden Spurwechsel warnendes Signal ausgegeben wird, falls mittels des Fahrerassistenzsystems (12) eine vorgegebene Gefahrensituation erfasst wird.

5. Verfahren nach einem der vorhergehenden Ansprüche,
**dadurch gekennzeichnet, dass**
unter Berücksichtigung der ermittelten Spurwechselabsicht die Durchführung des entsprechenden Spurwechsels durch das Fahrerassistenzsystem (12) unterbunden oder erschwert wird, solange mittels des Fahrerassistenzsystems (12) eine vorgegebene Gefahrensituation erfasst wird.

6. Verfahren nach Anspruch 4 oder 5,
**dadurch gekennzeichnet, dass**
es sich bei der vorgegebenen Gefahrensituation um ein Fahrzeug (48) handelt, welches sich zumindest teilweise neben dem Kraftwagen (10) auf einer mit der ermittelten Spurwechselabsicht korrespondierenden, benachbarten Fahrspur (42) befindet.

7. Verfahren nach einem der Ansprüche 4 oder 5,
**dadurch gekennzeichnet, dass**
es sich bei der vorgegebenen Gefahrensituation um ein herannahendes Fahrzeug (50) handelt, welches sich dem Kraftwagen (10) auf einer mit der ermittelten Spurwechselabsicht korrespondierenden, benachbarten Fahrspur (46) von hinten mit zumindest einer vorgegebenen Relativgeschwindigkeit nähert.

8. Fahrerassistenzsystem (12) für einen Kraftwagen (10), mit:
- einer Blickerfassungseinrichtung (16), welche dazu ausgelegt ist, eine Blickrichtung (18) eines Fahrers (14) des Kraftwagens (10) zu erfassen und eine Spurwechselabsicht des Fahrers (14) anhand der erfassten Blickrichtung (18) zu ermitteln;
- einer Steuereinrichtung (26), welche dazu ausgelegt ist, das Fahrerassistenzsystem (12) unter Berücksichtigung der ermittelten Spurwechselabsicht zu betreiben;
**dadurch gekennzeichnet, dass**
- die Blickerfassungseinrichtung (16) dazu ausgelegt ist, anhand der erfassten Blickrichtung (18) zu ermitteln, ob eine Blickzuwendung des Fahrers (14) zu jeweils vorgegebenen Spiegeln (20, 22, 24) des Kraftwagens (10) gemäß einer ersten vorbestimmten Reihenfolge oder gemäß einer zweiten vorbestimmten Reihenfolge erfolgt ist, wobei die erste vorbestimmte Reihenfolge eine Blickzuwendung des Fahrers (14) zu einem Innenspiegel (22) des Kraftwagens (10) und eine anschließende Blickzuwendung zu einem linken Außenspiegel (20) des Kraftwagens (10) und die zweite vorbestimmte Reihenfolge eine Blickzuwendung des Fahrers (14) zu dem Innenspiegel (22) des Kraftwagens (10) und eine anschließende Blickzuwendung zu einem rechten Außenspiegel (24) des Kraftwagens (10) umfasst;
- die Blickerfassungseinrichtung (16) dazu ausgelegt ist, eine Spurwechselabsicht nach links zu ermitteln, falls eine Blickzuwendung gemäß der ersten vorbestimmten Reihenfolge ermittelt worden ist;
- die Blickerfassungseinrichtung (16) dazu ausgelegt ist, eine Spurwechselabsicht nach rechts zu ermitteln, falls eine Blickzuwendung gemäß der zweiten vorbestimmten Reihenfolge ermittelt worden ist;
- das Fahrerassistenzsystem (12) dazu ausgelegt ist, die jeweilige Spurwechselabsicht nur dann zu ermitteln, falls zusätzlich innerhalb eines vorgegebenen Zeitraums vor, während und/oder nach der jeweiligen Blickzuwendung gemäß einer der vorbestimmten Reihenfolgen eine Berührung eines Blinkerhebels (30) des Kraftwagens (10) ermittelt worden ist, wobei am Blinkerhebel (30) ober- und unterseitig Sensoreinheiten (36) angeordnet sind, welche dazu ausgelegt sind, eine entsprechende Berührung des Blinkerhebels (30) zu erfassen;
- das Fahrerassistenzsystem (12) dazu ausgelegt ist, eine Spurwechselabsicht nach links nur dann zu ermitteln, falls eine Berührung an einer Oberseite des Blinkerhebels (30) ermittelt worden ist, und eine Spurwechselabsicht nach rechts nur dann zu ermitteln, falls eine Berührung an einer Unterseite des Blinkerhebels (30) ermittelt worden ist.

## Claims

1. Method to operate a driver assistance system (12) of a motor vehicle (10), having the steps:
- identifying a viewing direction (18) of a driver of the motor vehicle (10);
- determining a lane change intention of the driver (14) by means of the identified viewing direction (18);
- operating the driver assistance system (12) taking into consideration the determined lane change intention;
**characterised in that**
- by means of the identified viewing direction (18), it is determined whether a glance of the driver (14) toward respectively predetermined mirrors (20, 22, 24) of the motor vehicle (10) according to a first predetermined sequence or according to a second predetermined sequence has occurred, wherein the first predetermined sequence comprises a glance of the driver (14) toward an inner mirror (22) of the motor vehicle (10) and a subsequent glance toward a left outer mirror (20) of the motor vehicle (10) and the second predetermined sequence comprises a glance of the driver (14) toward the inner mirror (22) of the motor vehicle (10) and a subsequent glance toward a right outer mirror (24) of the motor vehicle (10);
- if a glance according to the first predetermined sequence has been determined, a lane change intention to the left is determined;
- if a glance according to the second predetermined sequence has been determined, a lane change intention to the right is determined;
- the respective lane change intention is only then determined if, additionally within a predetermined time period before, during and/or after the respective glance according to any one of the predetermined sequences, a touch of a indicator lever (30) of the motor vehicle (10) has been determined, wherein upper- and lower-side units (36) are arranged on the indicator lever (30) by means of which a corresponding touch of the indicator lever (30) is identified;
- a lane change intention to the left is only then determined if a touch of an upper side of the indicator lever (30) has been determined;
- a lane change intention to the right is only then determined if a touch of a lower side of the indicator lever (30) has been determined.

2. Method according to claim 1,
**characterised in that**
the respective lane change intention is only then determined if the glance according to any one of the respective predetermined sequences has occurred within a predetermined duration.

3. Method according to claim 2,
**characterised in that**
the predetermined duration is adapted depending on a current speed of the motor vehicle (10) and/or a current speed limit.

4. Method according to any one of the preceding claims,
**characterised in that**
taking into consideration the determined lane change intention, at least one signal warning of a corresponding lane change is emitted if a predetermined dangerous situation is identified by means of the driver assistance system (12).

5. Method according to any one of the preceding claims,
**characterised in that**
taking into consideration the determined lane change intention, the implementation of the corresponding lane change is prevented or impeded by the driver assistance system (12) as long as a predetermined dangerous situation is identified by means of the driver assistance system (12).

6. Method according to claim 4 or 5,
**characterised in that**
the predetermined dangerous situation is a vehicle (48) which is located at least partially next to the motor vehicle (10) in an adjacent lane (42) corresponding to the determined lane change intention.

7. Method according to any one of claims 4 or 5,
**characterised in that**
the predetermined dangerous situation is an approaching vehicle (50) which is approaching the motor vehicle (10) in an adjacent lane (46) corresponding to the determined lane change intention from behind with at least a predetermined relative speed.

8. Driver assistance system (12) for a motor vehicle (10), having:
- a viewing identification device (16) which is designed to identify a viewing direction (18) of a driver (14) of the motor vehicle (10) and to determine a lane change intention of the driver (14) by means of the identified viewing direction (18);
- a control device (26) which is designed to operate the driver assistance system (12) taking into consideration the determined lane change intention;
**characterised in that**
- the viewing identification device (16) is designed, by means of the identified viewing direction (18), to determine whether a glance of the driver (14) toward respectively predetermined mirrors (20, 22, 24) of the motor vehicle (10) according to a first predetermined sequence or according to a second predetermined sequence has occurred, wherein the first predetermined sequence comprises a glance of the driver (14) toward an inner mirror (22) of the motor vehicle (10) and a subsequent glance toward a left outer mirror (20) of the motor vehicle (10) and the second predetermined sequence comprises a glance of the driver (14) toward the inner mirror (22) of the motor vehicle (10) and a subsequent glance toward a right outer mirror (24) of the motor vehicle (10);
- the viewing identification device (16) is designed to determine a lane change intention to the left if a glance according to the first predetermined sequence has been determined;
- the viewing identification device (16) is designed to determine a lane change intention to the right if a glance according to the second predetermined sequence has been determined;
- the driver assistance system (12) is designed only then to determine the respective lane change intention if, additionally within a predetermined time period before, during and/or after the respective glance according to any one of the predetermined sequences, a touch of a indicator lever (30) of the motor vehicle (10) has been determined, wherein upper- and lower-side sensor units (36) are arranged on the indicator lever (30) which are designed to identify a corresponding touch of the indicator lever (30);
- the driver assistance system (12) is designed only then to determine a lane change intention to the left if a touch of an upper side of the indicator lever (30) has been determined, and only then to determine a lane change intention to the right if a touch of a lower side of the indicator lever (30) has been determined.

## Revendications

1. Procédé permettant de faire fonctionner un système d'assistance au conducteur (12) d'un véhicule automobile (10), comprenant les étapes consistant à :
- détecter une direction du regard (18) d'un conducteur du véhicule automobile (10) ;
- déterminer une intention de changer de voie du conducteur (14) sur la base de la direction du regard (18) détectée ;
- faire fonctionner le système d'assistance au conducteur (12) en tenant compte de l'intention de changer de voie déterminée ;
**caractérisé en ce que**
- sur la base de la direction du regard (18) détectée, il est déterminé si un coup d'oeil du conducteur (14) en direction de rétroviseurs (20, 22, 24) respectivement prédéfinis du véhicule automobile (10) a eu lieu conformément à un premier ordre prédéfini ou conformément à un second ordre prédéfini, dans lequel le premier ordre prédéfini comprend un coup d'oeil du conducteur (14) en direction d'un rétroviseur intérieur (22) du véhicule automobile (10) et un coup d'oeil suivant en direction d'un rétroviseur extérieur gauche (20) du véhicule automobile (10) et le second ordre prédéfini comprend un coup d'oeil du conducteur (14) en direction du rétroviseur intérieur (22) du véhicule automobile (10) et un coup d'oeil suivant en direction d'un rétroviseur extérieur droit (24) du véhicule automobile (10) ;
- si un coup d'oeil conformément au premier ordre prédéfini a été déterminé, une intention de changer de voie vers la gauche est déterminée ;
- si un coup d'oeil conformément au second ordre prédéfini a été déterminé, une intention de changer de voie vers la droite est déterminée ;
- l'intention de changer de voie respective est ensuite déterminée uniquement si, de manière additionnelle pendant une période prédéfinie avant, pendant et/ou après le coup d'oeil respectif conformément à l'un des ordres prédéfinis, un effleurement d'un levier de clignotant (30) du véhicule automobile (10) a été déterminé, dans lequel, sur des côtés supérieur et inférieur au niveau du levier de clignotant (30), sont agencées des unités de détection (36), au moyen desquelles un effleurement correspondant du levier de clignotant (30) est détecté ;
- une intention de changer de voie vers la gauche est ensuite déterminée uniquement si un effleurement au niveau d'un côté supérieur du levier de clignotant (30) a été déterminé ;
- une intention de changer de voie vers la droite est ensuite déterminée uniquement si un effleurement au niveau d'un côté inférieur du levier de clignotant (30) a été déterminé.

2. Procédé selon la revendication 1,
**caractérisé en ce que**
l'intention de changer de voie respective est ensuite déterminée uniquement si le coup d'oeil a eu lieu conformément à l'un des ordres prédéfinis respectifs pendant une durée prédéfinie.

3. Procédé selon la revendication 2,
**caractérisé en ce que**
la durée prédéfinie est adaptée en fonction d'une vitesse actuelle du véhicule automobile (10) et/ou d'une limitation de vitesse actuelle.

4. Procédé selon l'une quelconque des revendications précédentes,
**caractérisé en ce que**
en tenant compte de l'intention de changer de voie déterminée, au moins un signal avertissant du changement de voie correspondant est émis si une situation de danger prédéfinie est détectée au moyen du système d'assistance au conducteur (12).

5. Procédé selon l'une quelconque des revendications précédentes,
**caractérisé en ce que**
en tenant compte de l'intention de changer de voie déterminée, la réalisation du changement de voie correspondant est empêchée ou entravée par le système d'assistance au conducteur (12) tant qu'une situation de danger prédéfinie est détectée au moyen du système d'assistance au conducteur (12).

6. Procédé selon la revendication 4 ou 5,
**caractérisé en ce que**
la situation de danger prédéfinie concerne un véhicule (48) qui se trouve au moins en partie près du véhicule automobile (10) sur une voie de circulation voisine (42) correspondant à l'intention de changer de voie déterminée.

7. Procédé selon l'une quelconque des revendications 4 ou 5,
**caractérisé en ce que**
la situation de danger prédéfinie concerne un véhicule (50) s'approchant, qui se rapproche du véhicule automobile (10) par derrière à au moins une vitesse relative prédéterminée sur une voie de circulation voisine (46) correspondant à l'intention de changer de voie déterminée.

8. Système d'assistance au conducteur (12) pour un véhicule automobile (10), comprenant :
- un dispositif de détection du regard (16) conçu pour détecter une direction du regard (18) d'un conducteur (14) du véhicule automobile (10) et déterminer une intention de changer de voie du conducteur (14) sur la base de la direction du regard (18) détectée ;
- un dispositif de commande (26) conçu pour faire fonctionner le système d'assistance au conducteur (12) en tenant compte de l'intention de changer de voie déterminée ;
**caractérisé en ce que**
- le dispositif de détection du regard (16) est conçu pour déterminer, sur la base de la direction du regard (18) détectée, si un coup d'oeil du conducteur (14) en direction de rétroviseurs (20, 22, 24) respectivement prédéfinis du véhicule automobile (10) a eu lieu conformément à un premier ordre prédéfini ou conformément à un second ordre prédéfini, dans lequel le premier ordre prédéfini comprend un coup d'oeil du conducteur (14) en direction d'un rétroviseur intérieur (22) du véhicule automobile (10) et un coup d'oeil suivant en direction d'un rétroviseur extérieur gauche (20) du véhicule automobile (10) et le second ordre prédéfini comprend un coup d'oeil du conducteur (14) en direction du rétroviseur intérieur (22) du véhicule automobile (10) et un coup d'oeil suivant en direction d'un rétroviseur extérieur droit (24) du véhicule automobile (10) ;
- le dispositif de détection du regard (16) est conçu pour déterminer une intention de changer de voie vers la gauche si un coup d'oeil conformément au premier ordre prédéfini a été déterminé ;
- le dispositif de détection du regard (16) est conçu pour déterminer une intention de changer de voie vers la droite si un coup d'oeil conformément au second ordre prédéfini a été déterminé ;
- le système d'assistance au conducteur (12) est conçu pour déterminer ensuite l'intention de changer de voie respective uniquement si, de manière additionnelle pendant une période prédéfinie avant, pendant et/ou après le coup d'oeil respectif conformément à l'un des ordres prédéfinis, un effleurement d'un levier de clignotant (30) du véhicule automobile (10) a été déterminé, dans lequel, sur des côtés supérieur et inférieur au niveau du levier de clignotant (30), sont agencées des unités de détection (36) qui sont conçues pour détecter un effleurement correspondant du levier de clignotant (30) ;
- le système d'assistance au conducteur (12) est conçu pour déterminer ensuite une intention de changer de voie vers la gauche uniquement si un effleurement au niveau d'un côté supérieur du levier de clignotant (30) a été déterminé, et déterminer ensuite une intention de changer de voie vers la droite uniquement si un effleurement au niveau d'un côté inférieur du levier de clignotant (30) a été déterminé.
